# EUROPEAN PATENT APPLICATION

(11) **EP 4 811 448 A1**
(43) Date of publication of application: **23.09.2026**
(21) Application number: 25877976.8
(22) Date of filing: 10.10.2025
(51) Int. Cl.: H01M 4/36, H01M 4/505, C01G 53/50, H01M 10/052, H01M 4/02

(54) **POSITIVE ELECTRODE ACTIVE MATERIAL COMPRISING LITHIUM-RICH MANGANESE-BASED OXIDE, METHOD FOR MANUFACTURING SAME, AND LITHIUM SECONDARY BATTERY COMPRISING SAME**

(30) Priority: 11.10.2024 KR 20240138505; 02.10.2025 KR 20250145195
(71) Applicant: LG Energy Solution, Ltd., Seoul 07335 (KR)
(72) Inventor: LEE, Youshin, Daejeon 34122 (KR); LEE, Jeayoung, Daejeon 34122 (KR); KIM, Minjeong, Daejeon 34122 (KR); PARK, Hyunyoung, Daejeon 34122 (KR); LIM, Hyungwoo, Daejeon 34122 (KR); JEONG, Yeaji, Daejeon 34122 (KR); PARK, Sin Young, Daejeon 34122 (KR); HAN, Gi Beom, Daejeon 34122 (KR)
(74) Representative: Hoffmann Eitle
(86) International application number: PCT/KR2025/015940
(87) International publication number: WO 2026/079907

(57) **Abstract**

According to an embodiment of the present disclosure, provided is a positive electrode active material comprising:
a core including a lithium-rich manganese-based oxide in which a molar ratio of lithium to a transition metal excluding lithium is more than 1 and a molar content of manganese in the transition metal is 50 mol% or more, and
a surface layer located on the surface of the core, and including a compound in which a ratio of Li/Me (where Me is a metal excluding Li) is less than 1 on a molar basis,
wherein the core has a structure in which a layered structure and a rock-salt structure are mixed, and the surface layer has an olivine structure or an amorphous structure, a method of manufacturing the same, and a lithium secondary battery comprising the same.

## Description

### TECHNICAL FIELD

### Cross-Reference to Related Application(s)

This application claims priority to and the benefit of Korean Patent Application No. 10-2024-0138505, filed on October 11, 2024, and Korean Patent Application No. 10-2025-0145195, filed on October 2, 2025, the entire contents of which are incorporated herein by reference.

The present disclosure relates to a positive electrode active material comprising a lithium-rich manganese-based oxide, a method of manufacturing the same, and a lithium secondary battery comprising the same.

### BACKGROUND

Recently, as the application area of lithium secondary batteries has rapidly been extended not only to supply power for electronic devices such as electricity, electronics, communication, and computers, but also to power storage and supply for large-area devices such as automobiles and power storage systems, demand for secondary batteries that have high capacity, high output and high stability is increasing.

The lithium secondary battery generally consists of a positive electrode containing a positive electrode active material, a negative electrode containing a negative electrode active material, an electrolyte that serves as a medium for transferring lithium ions, and a separator. In this case, carbon-based active materials, silicon-based active materials, and the like can be used as the negative electrode active material. Furthermore, lithium transition metal oxides such as lithium cobalt oxide(LiCoO₂), lithium nickel oxide(LiNiO₂), and lithium nickel-cobalt-manganese composite oxide can be used as the positive electrode active material.

Meanwhile, lithium-rich manganese-based oxides have recently attracted attention as next-generation positive electrode active materials. Lithium-rich manganese-based oxides have a lower cobalt (Co) content and increased content of manganese(Mn) which is relatively inexpensive and has bountiful reserves, which provide the advantages of reducing costs and enabling a greater amount of lithium to be utilized, thus having a high capacity of 250 mAh/g or more.

In the case of lithium-rich manganese-based oxide, it has a structure in which layered phase (LiM'O₂) and rock-salt phase (Li₂MnO₃) are mixed. In the process of initial activation, the rock-salt phase is activated and excessive lithium ions are generated, so that the irreversible capacity of the negative electrode may be compensated. Consequently, it can be balanced with a silicon-based negative electrode without the need for a separate compensation material, such as a sacrificial positive electrode material, or a prior lithium compensation process, such as pre-lithiation. However, the lithium-rich manganese-based oxide has problems in that the operating voltage is high and thus, the positive electrode structure changes, and in the process of activation of the rock-salt phase, not only an oxygen-redox reaction occurs, but also a large quantity of gas is generated by side reactions with the electrolyte. In addition, not only deterioration in capacity occurs due to gas trapping, but also positive electrode deterioration becomes intensified due to the occurrence of cracks within the active material and the collapse of the crystal structure, which results in degradation in lifetime characteristics and drop in safety. In particular, when Si-based negative electrode active materials are used together as negative electrode active materials, the degradation of cycle characteristics occurs more severely.

Moreover, when used as a power source for automobiles, which are frequently left in a charged state, gas generation may be a fatal problem.

Therefore, research is being actively conducted to improve the performance of a lithium secondary battery including such a lithium-rich manganese-based oxide.

### DETAILED DESCRIPTION OF THE INVENTION

### Technical Problem

It is an object of the present disclosure to provide a positive electrode active material and a lithium secondary battery having the effect of improving gas generation in a charged state, even when a lithium-rich manganese-based oxide having a high manganese content is used as a positive electrode active material.

### Technical Solution

According to an aspect of the present disclosure, provided is a positive electrode active material comprising:
a core including a lithium-rich manganese-based oxide in which a molar ratio of lithium to a transition metal excluding lithium is more than 1 and a molar content of manganese in the transition metal is 50 mol% or more, and
a surface layer located on the surface of the core, and including a compound in which a ratio of Li/Me (where Me is a metal excluding Li) is less than 1 on a molar basis,
wherein the core has a structure in which a layered structure and a rock-salt structure are mixed, and the surface layer has an olivine structure or an amorphous structure.

The lithium-rich manganese-based oxide may be represented by the following Formula 1.

[Formula 1] xLi₂MnO₃·(1-x)Li[Ni_{1-y-z-w}Mn_{y}Co_{z}M_{w}]O₂

wherein M is at least one selected from the group consisting of Al, B, Co, Fe, Cr, Cu, W, Mg, V, Ti, Zn, Ga, In, Ru, Nb, Sn, Sr and Zr, 0.1≤x≤0.5, 0.4≤y<1, 0≤z≤0.1, and 0≤w≤0.2.

Specifically, the ratio of Li/Me in the surface layer may be 0.8 to 0.98.

The surface layer may comprise, specifically, a compound including Li, Fe, and P.

The surface layer does not comprise Mn, or may comprise Mn in an amount of 0.1 mol or less relative to 1 mol of Fe.

The surface layer may have a thickness of 3 nm to 2 µm, and may be formed over an area of 0.03% to 100% of the total surface area of the core.

According to another aspect of the present disclosure, provided is a method of manufacturing the positive electrode active material, the method comprising:
preparing a lithium-rich manganese-based oxide powder, mixing it with a solution containing a surface layer precursor, and washing the lithium-rich manganese-based oxide powder to form a surface layer.

The surface layer precursor may be a compound including Fe and a compound including P.

The solution may be distilled water.

The mixing may be performed at a temperature of 20°C to 80°C, and may be performed for 2 minutes to 2 hours.

In addition, the step of forming a surface layer may be performed, specifically, by the mixing, followed by drying and firing.

Here, the drying may be performed at a temperature of 80°C to 150°C for 1 hour to 10 hours, and the firing may be performed at a temperature of 500°C to 1050°C for 1 hour to 20 hours.

According to yet another aspect of the present disclosure, provided is a lithium secondary battery comprising: a positive electrode including the positive electrode active material, a negative electrode, and a separator interposed between the positive electrode and the negative electrode.

### BRIEF DESCRIPTION OF THE DRAWINGS

FIG. 1 is a graph showing the high-temperature storage characteristics according to Experimental Example 1.
FIG. 2 is a graph showing the XRD analysis results of the active material of Example 1 according to Experimental Example 2.
FIG. 3 is a graph showing the XRD analysis results of the active material of Comparative Example 1 according to Experimental Example 2.

### DETAILED DESCRIPTION OF THE EMBODIMENTS

Hereinafter, the present disclosure will be described in more detail to provide a better understanding of the present disclosure.

The terms used herein are provided to describe exemplary embodiments and are not intended to limit the inventive concept. The singular forms include plural forms unless the context clearly indicates otherwise.

Throughout the descriptions herein, when a certain part "includes" a component, this does not indicate that the certain part excludes other components, but indicates that the part may further include other components, unless otherwise defined.

### Positive Electrode Active Material

A positive electrode active material according to an embodiment of the present disclosure comprises:
a core including a lithium-rich manganese-based oxide in which a molar ratio of lithium to a transition metal excluding lithium is more than 1 and a molar content of manganese in the transition metal is 50 mol% or more, and
a surface layer located on the surface of the core, and including a compound in which Li/Me (metal excluding Li) is less than 1 on a molar basis,
wherein the core has a structure in which a layered structure and a rock-salt structure are mixed, and the surface layer has an olivine structure or an amorphous structure.

Here, the lithium-rich manganese-based oxide may be represented by the following Formula 1.

[Formula 1] xLi₂MnO₃·(1-x)Li[Ni_{1-y-z-w}Mn_{y}Co_{z}M_{w}]O₂

wherein M is at least one selected from the group consisting of Al, B, Co, Fe, Cr, Cu, W, Mg, V, Ti, Zn, Ga, In, Ru, Nb, Sn, Sr and Zr, 0.1≤x≤0.5, 0.4≤y<1, 0≤z≤0.1, and 0≤w≤0.2.

Here, the lithium-rich manganese-based oxide included in the core may have a molar ratio (Li/Metal) of lithium to a transition metal excluding lithium, of 1.1 to 1.6, specifically 1.2 to 1.6, and more specifically 1.3 to 1.6.

Further, in Formula 1, y may be specifically 0.4 to 0.9, more specifically 0.4 to 0.8, and z and w may each be specifically 0 to 0.1.

That is, as described above, a lithium-rich manganese-based oxide as the core material is a material that comprises a compound with a layered structure and a compound with a rock-salt structure, and has a high Mn content and a high Li content, and thus is excellent in capacity characteristics.

However, in the process of activation of the rock-salt phase, an oxygen-redox reaction occurs, which generates a large quantity of gas, and therefore, a measure for preventing this is required.

In this regard, the present inventors have conduced in-depth research and as a result, have found that when the core surface includes a surface layer including a compound having an olivine structure or an amorphous structure while a ratio of Li/Me being less than 1, this problem can be resolved and the cycle characteristics can be improved.

Thereby, the surface layer located on the surface of the core comprises a compound in which a ratio of Li/Me (where Me is a metal excluding Li) is less than 1 on a molar basis.

Wherein, the Li/Me ratio may be specifically 0.5 to 0.98 on a molar basis, more specifically 0.8 to 0.98, and most specifically 0.85 to 0.9.

In this case, the compound included in the surface layer may be a lithium-based phosphate including various doped metals. For example, the compound may be a lithium-based phosphate including Ni, Co, Fe, Cr, Cu, W, Mg, V, Ti, Zn, Ga, In, Ru, Nb, Sn, Sr, etc.

However, the surface layer may have an olivine structure different from the core, an amorphous structure not having complete crystallinity, or a structure in which these are mixed.

Among these, from the viewpoint of preventing a deterioration in output characteristics while enhancing the surface safety of the lithium-rich manganese-based oxide, the surface layer may specifically be a compound including Li, Fe and P, and more specifically, may be a LiₐFePO₄-based compound. Here, a may be 0.5 to 0.98, more specifically 0.8 to 0.98, and most specifically 0.85 to 0.9

Here, the LiₐFePO₄-based compound may be a material having an olivine structure, such as LiₐFePO₄, or an amorphous material including the above materials but not forming a complete crystal structure. As such, the surface layer may not include Mn.

Alternatively, the LiₐFePO₄-based compound may be in a form in which the Mn in the core is partially incorporated. However, the amount of Mn incorporated may be very small, specifically 0.1 mol or less, more specifically 0.05 mol or less, or even more specifically 0.01 mol or less, relative to 1 mol of Fe.

This surface layer does not contain Li in excessive amount and thus can prevent side reactions with the electrolyte. This can not only reduce gas generation but also improve surface stability. Furthermore, because the surface layer has a structure with increased voids at Li sites and increased space within the crystal structure, thereby increasing lithium ion mobility and also enhancing secondary battery performance.

The thickness of the surface layer may be 3 nm to 2 µm, specifically 5 nm to 0.5 µm, and more specifically 5 nm to 0.1 µm.

If the thickness of the surface layer falls outside the above range and is too thin, the intended effects of the present disclosure, such as improved surface stability or improved lithium mobility, may not be achieved. If the thickness of the surface layer is too thick, lithium mobility may decrease, and capacity may decrease due to a reduced core content, which is not preferable.

Further, the surface layer may be formed over an area of 0.03% to 100% of the total surface area of the core, specifically 1% to 100%, more specifically 1% to 50%, and most specifically 1% to 30%.

If the surface layer is formed over an area that falls outside the above range and is too small, the core is largely exposed, the possibility of electrolyte side reactions is still high, it is difficult to prevent oxidation-reduction reactions from occurring, and thus gas generation cannot be reduced, which are not preferable.

The lithium-rich manganese-based oxide may have a monomodal structure composed of large particles having an average diameter (D50) of 5µm to 20 µm, or may have a bimodal structure including the large particles and small particles with an average diameter (D50) of 2 µm to 5µm.

Here, the monomodal structure is characterized by forming on D50 peak in particle analysis, and the bimodal structure is characterized by forming two peaks in particle analysis.

Further, the large particle may be a secondary particle having a structure where tens or hundreds of primary single particles are aggregated together, and the small particle may be a single particle of the primary particle or secondary particle.

The average diameter (D50) of the large particle may be, specifically, 5µm to 15µm, and more specifically, 5µm to 14µm.

The average diameter (D50) of the small particle may be, specifically, 3µm to 5µm, and more specifically, 3µm to 4µm.

The "average diameter D50" means the particle diameter at 50% of the cumulative particle volume distribution according to the particle diameter. In other words, D50 is the particle diameter at 50% of the cumulative particle volume distribution according to the particle diameter.

The D50 may be measured using a laser diffraction method. Specifically, the particle size distribution may be determined by a process which includes dispersing the powder to be measured in a dispersion medium, then introducing it into a commercially available laser diffraction particle size measurement device (e.g., Microtrac S 3500), and measuring the difference in diffraction patterns according to the particle diamter when particles pass through a laser beam. The D50 may be measured by calculating the particle diameters at points corresponding to 50% of the cumulative particle volume distribution according to the particle diameter in the measuring device.

### Method of Manufacturing Positive Electrode Active Material

According to another aspect of the present disclosure, there is provided a method of manufacturing the positive electrode active material, the method comprising: preparing a lithium-rich manganese-based oxide powder, mixing it with a solution containing a surface layer precursor, and washing the lithium-rich manganese-based oxide powder to form a surface layer.

Here, the lithium-rich manganese-based oxide powder may be the material represented by Formula 1.

The lithium-rich manganese-based oxide powder represented by Formula 1 may be formed by mixing a precursor material for preparing the lithium-rich manganese-based oxide with a lithium compound and heat-treating the mixture.

In this case, the precursor material may be a compound or coprecipitate of materials including other elements excluding Li, among the materials included in the lithium-rich manganese-based oxide. For example, oxides, sulfates, nitrates, acetates, carbonates, oxalates, citrates, halides, hydroxides, or oxyhydroxides including other elements excluding Li may be used, or a coprecipitate of such materials may be used.

The lithium compound may also include lithium-containing oxides, sulfates, nitrates, acetates, carbonates, oxalates, citrates, halides, hydroxides, or oxyhydroxides. Specific examples include Li₂CO₃, LiNO₃, LiNO₂, LiOH, LiOH · H₂O, LiH, LiF, LiCl, LiBr, LiI, CH₃COOLi, Li₂O, Li₂SO₄, CH₃COOLi, or Li₃C₆H₅O₇, but Li₂CO₃, LiOH, or Li₂O is preferred.

The heat treatment may be performed at a temperature ranging from 700°C to 1050°C and may be performed in an inert atmosphere. If the temperature falls outside the above range and is too low, the lithium-rich manganese-based oxide may not form properly, and if the temperature is too high, there is a problem that lithium may volatilize, which is not preferable.

After the lithium-rich manganese-based oxide powder is prepared in this manner, it is mixed with a solution containing a surface layer precursor.

Here, the solution containing the surface layer precursor is prepared by mixing the surface layer precursor with a solvent. The surface layer precursor is a precursor containing the metal (Me) included in the surface layer, and may be an oxide, sulfate, nitrate, acetate, carbonate, oxalate, citrate, halide, hydroxide, or oxyhydroxide. Specifically, since the surface layer includes Fe and P, it may be a compound containing Fe, such as an oxide, sulfate, nitrate, acetate, carbonate, oxalate, citrate, halide, hydroxide, or oxyhydroxide including Fe, and a compound containing P, for example H₃PO₄ or (NH₄)₃PO₄.

Further, to ensure that the surface layer has a different crystal structure from the core, the surface layer precursor does not contain Mn.

The solvent may be an aqueous solvent, specifically distilled water.

After preparing a solution containing the surface layer precursor, the lithium-rich manganese-based oxide powder may be mixed with the solution.

In this case, the mixing may be performed at a temperature of 20°C to 80°C, specifically 25°C to 40°C, or at room temperature.

Further, the mixing may be performed for 2 minutes to 2 hours, specifically 5 minutes to 2 hours, or more specifically 5 minutes to 20 minutes.

Through this mixing, Li impurities located on the surface of the lithium-rich manganese-based oxide powder may be washed by mixing them with the solution, thereby forming a surface layer with a Li/Me ratio of less than 1. Thereby, it is possible to enhance the safety of the surface layer and significantly reduce electrolyte side reactions.

Meanwhile, when the mixing is completed, the mixture may be dried and fired to complete the formation of the surface layer.

Here, the drying and firing may be performed in a vacuum oven. The drying may be performed at a temperature of 80°C to 150°C for 1 hour to 10 hours, specifically at a temperature of 90°C to 140°C for 2 hours to 10 hours, and more specifically at a temperature of 100°C to 120°C for 4 hours to 10 hours.

Furthermore, the firing may be performed at a temperature of 300°C to 1050°C for 1 hour to 20 hours, specifically at a temperature of 500°C to 1050°C for 1 hour to 10 hours, and more specifically at a temperature of 500°C to 1000°C for 1 hour to 10 hours.

The surface layer upon which the firing is completed in this manner can have an olivine structure, a spinel structure, or an amorphous structure as described above, and thus is effective in reducing gas and can also increase the stability of the surface structure.

### Lithium Secondary Battery

On the other hand, according to yet another aspect of the present disclosure, a lithium secondary battery comprising a positive electrode including the positive electrode active material is provided.

Specifically, a lithium secondary battery may include an electrode assembly including the positive electrode, a negative electrode, and a separator interposed between the positive electrode and the negative electrodes, and an electrolyte.

The positive electrode has a structure in which a positive electrode mixture layer is formed on one surface or both surfaces of a positive electrode current collector.

The positive electrode current collector may generally have a thickness of 3 to 500 µm. The positive electrode current collector is not particularly limited as long as it has high conductivity without causing a chemical change in the battery, and for example, stainless steel, aluminum, nickel, titanium, fired carbon, or aluminum or stainless steel whose surface is treated with carbon, nickel, titanium, silver, or the like may be used. The current collector may have fine protrusions and depressions formed on a surface thereof to enhance adherence of a positive electrode active material. For example, the current collector may be used in various forms such as a film, a sheet, a foil, a net, a porous body, a foaming body, and a non-woven fabric structure.

The positive electrode mixture layer may further include the binder, conductive material, and other additives in addition to the positive electrode active material.

The positive electrode active material is, in addition to the lithium-rich manganese-based oxide, for example, a compound capable of reversible intercalation and deintercalation of lithium, and it may further include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5≤a≤+0.5, 0≤x≤0.5, 0≤b≤0.1), or the like.

When the positive electrode active material is a mixture of the lithium-rich manganese-based oxide and other positive electrode active materials, the lithium-rich manganese-based oxide may be included in an amount of 80 wt.% or more, or 90 wt.% or more, based on the total weight of the active material.

The conductive material is a component for further improving the conductivity of the positive electrode active material, and is not particularly limited as long as it has conductivity without causing a chemical change in the battery, and for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the lithium metal battery and further enhance output characteristics.

Typically, the conductive material may be included in an amount of 1 to 20 wt.%, or 1 to 15 wt.%, or 1 to 10 wt.%, based on the total weight of the positive electrode mixture layer.

The binder is a component that assists in the bonding between the positive electrode active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluorine rubber or the like. Mixtures or copolymers of two or more selected from these may also be used.

Typically, the binder may be included in an amount of 1 to 20 wt.%, or 1 to 15 wt.%, or 1 to 10 wt.% based on the total weight of the positive electrode mixture layer.

In addition, other additives may further include, for example, a filler or the like as a component for inhibiting the expansion. The filler is not particularly limited as long as it can inhibit the expansion of the electrode without causing a chemical change in the corresponding battery, and examples thereof may include olefinic polymers such as polyethylene and polypropylene; fibrous materials such as glass fibers and carbon fibers, and the like.

The negative electrode has a structure in which a negative electrode mixture layer is formed on one surface or both surfaces of a negative electrode current collector.

The negative electrode current collector may typically have a thickness of 3 to 500 µm. In addition, the negative electrode current collector is not particularly limited so long as it does not cause a chemical change in the corresponding battery and has conductivity, and an example thereof may be one selected from the group consisting of copper, stainless steel, aluminum, nickel, titanium, fired carbon, copper that is surface-treated with dissimilar metal, stainless steel that is surface-treated with dissimilar metal, and an aluminum-cadmium alloy. The current collector may have fine protrusions and depressions formed on a surface thereof to enhance adherence of a negative electrode active material, and may be used in various forms such as a film, a sheet, a foil, a net, a porous body, a foaming body, and a non-woven fabric structure.

The negative electrode mixture layer may include a binder, a conductive material, and other additives as described for the positive electrode, along with a negative electrode active material.

The negative electrode active material may include at least one carbon-based material selected from the group consisting of graphite, amorphous hard carbon, low-crystalline soft carbon, carbon black, acetylene black, Ketjen black, super P, graphene and fibrous carbon; Si-based materials; metal composite oxides such as LiₓFe₂O₃(0≤x≤1), LiₓWO₂(0≤x≤1), SnₓMe_{1- x}Me'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; lithium titanium oxide, or the like, but are not limited thereto as long as they are known in the art.

The separator may be composed of polymer substrate, or may be a safety reinforced separator (SRS) in which a coating layer containing binding materials and inorganic particles is formed on one surface or both surfaces of the polymer substrate.

The polymer substrate may be, for example, a polyolefin-based substrate. The polyolefin-based substrate may be used in the form of a sheet, multilayer membrane, microporous film, woven fabric, or nonwoven fabric, but is not necessarily limited thereto. The polyolefin-based substrate may be a thin insulating film with high ion permeability and mechanical strength. The pore diameter of the separator may generally be in the range of 0.01 to 10µm, and the thickness may generally be in the range of 5 to 300µm, but is not limited thereto.

The polymer substrate of the SRS separator may be the polyolefin substrate.

The inorganic particle of the coating layer makes it possible to form an empty space between inorganic particles, and plays a role to form a fine porosity and also serves as a spacer capable of maintaining a physical form. Further, the inorganic particles generally have a feature of not having a physical property changed even at a high temperature of 200°C or higher, and thus the organic-inorganic mixed layer formed comes to have an excellent thermal resistance.

The inorganic particles are not particularly limited, as long as they are electrochemically stable. In other words, the inorganic particles which may be used in the present disclosure are not particularly limited, unless they cause an oxidation and/or reduction reaction in a working voltage range of a battery to be applied. In particular, in case of using an inorganic particle having an ion transfer capacity, an ionic conductance in electrochemical elements may be increased to improve a performance, and thus the one having a high ion conductance is preferable. Further, if the inorganic particle has a high density, it is difficult to disperse such particles during manufacturing and there is a problem of increasing a weight when manufacturing a battery. Thus, the one having a small density is preferable, if possible. In addition, an inorganic material having a high dielectric constant contributes to an increase in a degree of dissociation of electrolytic salt in liquid electrolyte, e.g., lithium salt, thereby improving the ion conductivity of the electrolyte. Finally, inorganic particles having thermal conductivity are more preferable because they have excellent heat absorbing ability and therefore inhibit the phenomenon in which heat is concentrated locally to form a heat generation point, leading to thermal runaway.

For the reasons mentioned above, the inorganic particle is preferably one or more selected from the group consisting of (a) a high-dielectric constant inorganic particle having a dielectric constant of 1 or more, 5 or more, preferably 10 or more, (b) an inorganic particle having piezoelectricity, (c) a thermal conductive inorganic particle, and (d) an inorganic particle having a lithium ion transfer ability.

The inorganic particle having piezoelectricity means a material which is a non-conductor at atmospheric pressure, but which has an electrified property due to a change in an internal structure when a certain pressure is applied. Such inorganic particle exhibits a high dielectric characteristic, in which a dielectric constant is 100 or more. If such inorganic particle is tensioned or compressed upon the application of a certain pressure, electric charges are generated to respectively charge one side positively and the other side negatively. Thus, such particle is a material which has a function of causing a potential difference between both sides.

Examples of the inorganic particle having piezoelectricity include BaTiO₃, Pb(Zr,Ti)O₃ (PZT), Pb₁₋ₓLaₓZr_{1-y}Ti_{y}O₃ (PLZT), PbMg₃Nb_{2/3})O₃-PbTiO₃ (PMN-PT) hafnia (HfO₂), a mixture thereof or the like, but are not limited thereto.

The inorganic particle having the lithium ion transfer capacity refers to an inorganic particle which has a function of containing a lithium element, but not storing lithium to move a lithium ion. The inorganic particle having the lithium ion transfer capacity may transfer and move a lithium ion due to a kind of defects present inside a structure of particle. Thus, such particle may prevent a decrease in lithium mobility, thereby preventing a decrease in a battery capacity.

Examples of the inorganic particle having the lithium ion transfer capacity include: (LiAlTiP)ₓO_{y}-based glass (0<x<4, 0<y<13) such as lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), 14Li₂O-9Al₂O₃-38TiO₂-39P₂O₅, etc.; lithium germanium thiophosphate (LiₓGe_{y}P_{z}S_{w}, 0<x<4, 0<y<1, 0<z<1, 0<w<5) such as lithium lanthanum titanate (LiₓLa_{y}TiO₃, 0<x<2, 0<y<3), Li_{3.25}Ge_{0.25}P_{0.75}S₄, etc.; lithium nitride (LiₓN_{y}, 0<x<4, 0<y<2) such as Li₃N, etc.; SiS₂-based glass (LiₓSi_{y}S_{z}, 0<x<3, 0<y<2, 0<z<4) such as Li₃PO₄-Li₂S-SiS₂, etc.; P₂S₅-based glass (LiₓP_{y}S_{z}, 0<x<3, 0<y<3, 0<z<7) such as LiI-Li₂S-P₂S₅, etc.; a mixture thereof; or the like, but are not limited thereto.

Further, examples of the inorganic particle having a dielectric constant of 1 or more include SrTiO₃, SnO₂, CeO₂, MgO, NiO, CaO, ZnO, ZrO₂, Y₂O₃, Al₂O₃, TiO₂, SiC, a mixture thereof or the like, but are not limited thereto.

The thermal conductive inorganic particle is a material which provides low thermal resistance but no electrical conductivity and thus have insulation properties, and may be, for example, at least one selected from the group consisting of aluminum nitride (AlN), boron nitride (BN), alumina (Al₂O₃), silicon carbide (SiC), and beryllium oxide (BeO), but are not limited thereto.

In case of using the above-described high dielectric inorganic particle, the inorganic particle having piezoelectricity, the thermal conductive inorganic particle and the inorganic particle having the lithium ion transfer capacity together, a synergy effect thereof may be doubled.

A size of the inorganic particle is not limited, but it is preferable that the size thereof is in a range of 0.001 to 10 µm, if possible, in order to form an appropriate porosity between the inorganic particles. If such size is less than 0.001 µm, dispersibility is deteriorated and thus it becomes difficult to control a physical property. If such size is more than 10 µm, a thickness is increased to degrade the mechanical property and also the coating layer does not fulfill a role thereof due to an excessively large pore size, but increases a chance of causing an internal short circuit while charging and discharging a battery.

A content of the inorganic particle is not particularly limited, but it is preferable that such content is in a range of 1 to 99 wt.%, more preferably in a range of 10 to 95 wt.% per 100 wt.% of a mixture of an inorganic particle and a binding material. If the content thereof is less than 1 wt.%, the content of binding material becomes excessively large to decrease a pore size and a porosity due to a decrease in empty space formed between inorganic particles, and thus mobility of lithium ion may be deteriorated. In contrast, if the content thereof is more than 99 wt.%, the content of binding material becomes excessively small to deteriorate a mechanical property of the coating layer due to a weakened adhesive strength between inorganic materials.

On the other hand, the binding material is not limited, unless it causes a side reaction with the electrolyte. In particular, the binding material may be one of which a glass transition temperature (Tg) is as low as possible, preferably in the range of -200 to 200°C. This is because such binding material may improve the mechanical properties of a final insulating film.

Further, the binding material does not need to have ion conduction capacity, but it is more preferable to use a polymer having ion conduction capacity.

Thus, it is preferable that the binding material has a high dielectric constant. Indeed, a degree of dissociation of salt in an electrolyte depends on the dielectric constant of an electrolytic solvent. As the dielectric constant of the polymer increases, the degree of dissociation of salt in the electrolyte may be improved. The dielectric constant of the polymer used may be 1 or more, particularly in a range of 1.0 to 100 (measurement frequency=1 kHz), and preferably 10 or more.

In addition to the functions described above, the binding material may have a feature of being gelled to show a high degree of swelling with an electrolytic solution, when being impregnated into the liquid electrolytic solution. Indeed, if the binding material is a polymer having an excellent degree of swelling with an electrolytic solution, the electrolytic solution injected after assembling of a battery permeates the polymer, and the polymer retaining the absorbed electrolytic solution comes to have an ion conduction capacity for the electrolyte. Thus, if possible, a solubility index of the polymer is preferably in a range of 15 to 45 MPa^{1/2}, more preferably in a range of 15 to 25 MPa^{1/2} and 30 to 45 MPa^{1/2}. If the solubility index is less than 15 MPa^{1/2} and more than 45 MPa^{1/2}, it becomes difficult to have swelling with the liquid electrolytic solution for a conventional battery.

Examples of the binding material may be one or more selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, and polyvinyl alcohol.

The total thickness of the separator may be 5 micrometers to 20 micrometers, particularly 5 micrometers to 15 micrometers, more particularly 6 micrometers to 13 micrometers. When the thickness of the separator satisfies the above range, it is possible to effectively prevent short circuits between the positive and negative electrodes while minimizing the resistance of the lithium secondary battery. As a result, it is possible to prevent a decrease in the energy density of the lithium secondary battery and improve the lifetime characteristics.

The electrolyte may be a lithium non-aqueous electrolyte, and the lithium non-aqueous electrolyte may include a lithium salt and a non-aqueous organic solvent.

In this case, the lithium salt is used as a medium for transferring ions within a lithium secondary battery. The lithium salt may include Li⁺ as a cation, and at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ , as an anion.

Specifically, the lithium salt may include one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), or a mixture of two or more of them. However, in terms of excellent stability, it includes preferably Li(N(SO₂CF₃)₂.

In addition to these, lithium salts commonly used in electrolytes of lithium secondary batteries can be used without limitation.

The concentration of the lithium salt can be appropriately changed within a generally usable range, but the lithium salt may be included in the electrolyte at a concentration of 0.5M to 3M, particularly at a concentration of 1M to 2.5M, and more particularly at a concentration of 1M to 2M, in the electrolyte in order to obtain an optimal effect of forming a film for preventing corrosion on the electrode surface. When the concentration of the lithium salt satisfies the above range, the effect of improving cycle characteristics during high-temperature storage of the lithium secondary battery is sufficient, and the viscosity of the electrolyte is appropriate, thereby capable of improving electrolyte wetting property.

The non-aqueous organic solvent is not limited as long as it can minimize decomposition due to an oxidation reaction or the like in the voltage range of the charge/discharge process of the lithium secondary battery, and can exhibit its properties together with a material. For example, a carbonate-based organic solvent, an ether-based organic solvent, an ester-based organic solvent, and the like may be used alone or in mixture of two or more thereof, and specifically, a carbonate-based organic solvent may be used.

The carbonate-based organic solvent among the organic solvents may include at least one selected from the group consisting of a cyclic carbonate-based organic solvent and a linear carbonate-based organic solvent. Specifically, the cyclic carbonate-based organic solvent may include at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC). Specifically, it may include a mixed solvent of ethylene carbonate having a high dielectric constant and propylene carbonate having a relatively low melting point compared to the ethylene carbonate.

Further, the linear carbonate-based organic solvent is a solvent having low viscosity and low dielectric constant, and may include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and, more specifically, it may include dimethyl carbonate.

The ether-based organic solvent may include any one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the cyclic carbonate-based compound is mixed with the low viscosity, a low dielectric constant linear carbonate-based compound such as dimethyl carbonate and diethyl carbonate and a linear ester-based compound, in an appropriate ratio, an electrolyte having high electrical conductivity may be prepared, which may be more preferably used.

Moreover, the lithium non-aqueous electrolyte further comprise a functional additive. The functional additive may be included to prevent the induction of breaking of the negative electrode in a high power environment, or to further improve low-temperature high-rate discharge characteristics, high-temperature stability, overcharge prevention, swelling improvement effect during high-temperature storage, and the like.

Specifically, a representative example of the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3 wt.% to 5 wt.%, and particularly 1 wt.% to 5 wt.% based on the total weight of the electrolyte. When the amount of the sultone-based compound in the electrolyte is more than 5 wt.%, an excessively thick layer may be formed on the surface of the electrode to cause an increase in resistance and a degradation of output, and resistance due to the excessive amount of the additive may also be increased to degrade output characteristics.

The sulfite-based compound may include at least one compound selected from the group consisting of ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, and 1,3-butylene glycol sulfite, and may be included in an amount of 3 wt.% or less based on the total weight of the electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3 wt.% or less based on the total weight of the electrolyte.

The sulfate-based compound may include ethylene sulfate(Esa), trimethylene sulfate(TMS), or methyl trimethylene sulfate(MTMS), and may be included in an amount of 3 wt.% or less based on the total weight of the electrolyte.

Further, the halogen-substituted carbonate-based compound may include fluoroethylene carbonate(FEC), and may be included in an amount of 5 wt.% or less based on the total weight of the electrolyte. When the amount of the halogen-substituted carbonate-based compound in the electrolyte is more than 5 wt.%, cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3 wt.% or less based on the total weight of the electrolyte. When the content of the cyclic carbonate-based compound in the electrolyte is more than 3 wt.%, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(2,2,2-trifluoroethyl)phosphite, and may be included in an amount of 3 wt.% or less based on the total weight of the electrolyte.

The borate-based compound may include lithium oxalyldifluoroborate, and may be included in an amount of 3 wt.% or less based on the total weight of the electrolyte.

The lithium salt-based compound is a compound different from the lithium salt included in the lithium non-aqueous electrolyte. The lithium salt-based compound may include at least one compound selected from the group consisting of LiPO₂F₂, LiODFB, LiBOB (lithium bisoxalate borate (LiB(C₂O₄)₂) and LiBF₄, and may be included in an amount of 3 wt.% or less based on the total weight of the electrolyte.

Two or more kinds of the functional additives may be mixed, and included in an amount of 20 wt.% or less, particularly 0.1 wt.% to 10 wt.%, based on the total weight of the lithium non-aqueous electrolyte. When the content of the functional additive is more than 20 wt.%, there is a possibility that excessive side reactions in the lithium non-aqueous electrolyte may occur during charge and discharge of the battery. In particular, it is not sufficiently decomposed at high temperatures, and may exist as an unreacted material or in a precipitated state in an electrolyte at room temperature. Thereby, side reactions may occur in which the lifetime or resistance characteristics of the lithium metal battery are reduced.

Hereinafter, embodiments of the present disclosure will be described with reference to examples to demonstrate advantage effects of the invention.

### <Example 1>

### Synthesis of Core

A transition metal precursor (Ni_{0.35}Mn_{0.65}(OH)₂) and a lithium precursor were mixed so that the molar ratio between a transition metal and Li was 1:1.25, and the mixture was fired at 850°C in an oxygen atmosphere (50% oxygen content) to prepare a lithium-rich manganese-based oxide (0.37Li₂MnO₃·0.63Li[Ni_{0.563}Mn_{0.437}]O₂).

### Formation of Surface Layer

After the lithium-rich manganese-based oxide (0.37Li₂MnO₃·0.63Li[Ni_{0.563}Mn_{0.437}]O₂) was prepared, Fe(NO₃)₃·H₂O : H₃PO₄ were added in a molar ratio of 1:1, Fe(NO₃)₃·H₂O : citric acid were mixed in a molar ratio of about 1:2, and mixed 10 mL of distilled water to prepare a mixture. 5 g of the lithium-rich manganese-based oxide was then added to the resulting mixture, stirred at 25°C for 5 minutes, then dried in an oven at 120°C for 5 hours, and then heat-treated at 600°C for 5 hours to prepare a positive electrode material having a surface layer formed thereon.

### <Comparative Example 1>

The lithium-rich manganese-based oxide having no surface layer was used as the positive electrode active material.

### <Experimental Example 1>

Using the positive electrode active materials prepared in Example 1 and Comparative Example 1, respectively, the positive electrode active material, the binder (PVdF), and the conductive material (CNT) were mixed in NMP (N-methylpyrrolidone) at a weight ratio of 96:3:1 to prepare a positive electrode slurry. The positive electrode slurry was applied to a 20-µm thick aluminum foil to a thickness of 40 µm, dried at 130°C, and rolled to prepare a positive electrode.

Artificial graphite was used as the positive electrode active material, and the negative electrode active material, the conductive material (CNT), styrene-butadiene rubber (SBR) as the binder, and carboxymethyl cellulose (CMC) as the additive were mixed in water at a weight ratio of 96.2:0.8:2:1 to prepare a negative electrode slurry. The negative electrode slurry was then coated on an 8-µm thick Cu foil to a thickness of 30µm, dried at 130°C, and rolled to prepare a negative electrode.

A separator having organic/inorganic coating layers (Al₂O₃ and PVDF were mixed in a weight ratio of 90:10) formed on both surface of a polypropylene (PP) substrate was interposed between the positive electrode and the negative electrode to prepare an electrode assembly.

A pouch-type lithium secondary battery was manufactured using the electrode assembly and an electrolyte (100 mL) containing 1 M LiPF₆ in a solvent with an EC:EMC ratio of 3:7.

The lithium secondary battery was charged up to 4.6 V at 0.1 C (CC/CV mode) at 25°C, and then discharged up to 2.0 V at a constant current of 0.1 C (CC mode). Through this process, charging and discharging were performed once and activated to manufacture the lithium secondary battery.

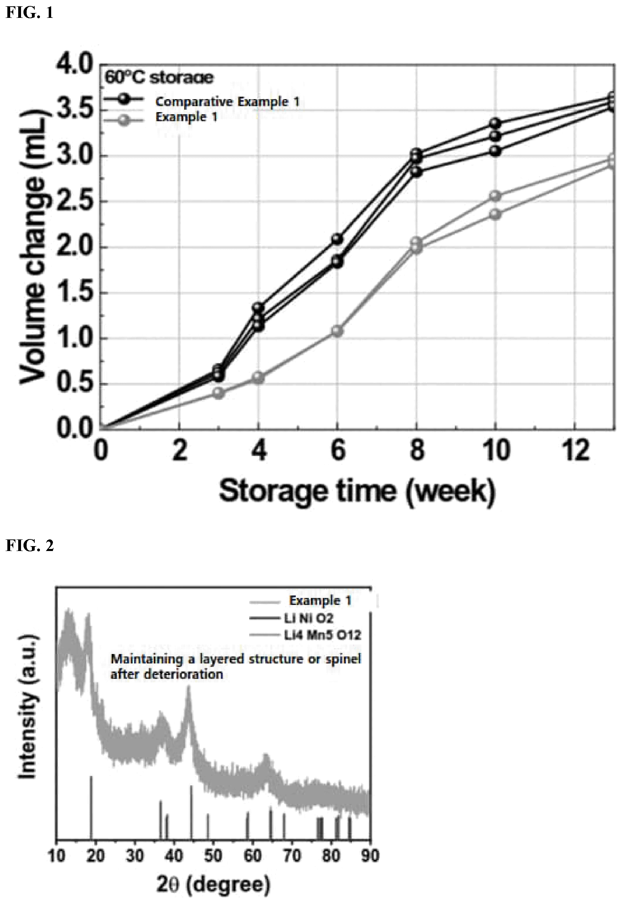

The lithium secondary battery was stored in a 60°C chamber for 12 weeks, and the volume change of the lithium secondary battery was measured. The results are shown in FIG. 1. The measurements were repeated 2-3 times for lithium secondary batteries using the positive electrode active materials of Example 1 and Comparative Example 1.

Referring to FIG.1, it can be seen that when the positive electrode active material according to the present disclosure was included, volume change was smaller and gas generation was reduced as compared with the case where the positive electrode active material of Comparative Example 1 having no surface layer was used.

### <Experimental Example 2>

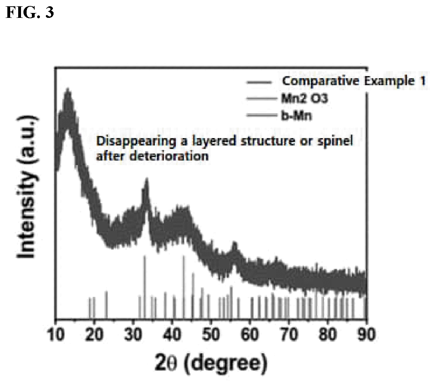

For the lithium secondary battery prepared in Experimental Example 1, a process of charging up to 4.6V at 0.1C (CC/CV mode) and discharging up to 2.0V at a constant current of 0.1C was performed once, and subsequently, a process of charging up to 4.35V at 0.1C (CC/CV mode) and discharging to 2.0V at a constant current of 0.1C was performed once again, and then charging to 4.35V at 0.33C (CC/CV mode) was performed. After high-temperature storage was performed in a 60°C chamber for 12 weeks under this charged state, the secondary battery was decomposed, and the change in the crystal structure of the positive electrode active materials was measured through XRD measurement. The results are shown in FIGS. 2 and 3. The conditions for XRD measurement are as follows:
* Equipment: Brucker D2 phaser
* X-ray wavelength: 1.5406Å
* Scan speed: 1 sec/0.01° exposure
* Measurement time: 150 minutes

Referring to FIGS. 2 and 3, it can be confirmed that the positive electrode active material according to the present disclosure maintains its crystal structure, whereas the positive electrode active material according to Comparative Example 1 has its crystal structure collapsed by an oxygen-redox reaction.

Based on the above disclosure, various applications and modifications can be carried out by those of ordinary skill in the art without deviating from the spirit and scope of the present disclosure.

### [Industrial Applicability]

According to the present disclosure, a coating layer having a Li/M ratio of less than 1 and a structure different from that of the lithium-rich manganese-based oxide is formed on a core including a lithium-rich manganese-based oxide having a high manganese (Mn) content, thereby improving the surface safety of a positive electrode active material including the coating layer. As a result, it is possible to reduce side reactions in the electrolyte of the lithium secondary battery, minimize gas generation, and exhibit an improved effect on gas generation even in a charged state.

## Claims

1. A positive electrode active material comprising:
a core including a lithium-rich manganese-based oxide in which a molar ratio of lithium to a transition metal excluding lithium is more than 1 and a molar content of manganese in the transition metal is 50 mol% or more, and
a surface layer located on the surface of the core, and including a compound in which a ratio of Li/Me (where Me is a metal excluding Li) is less than 1 on a molar basis,
wherein the core has a structure in which a layered structure and a rock-salt structure are mixed, and the surface layer has an olivine structure or an amorphous structure.

2. The positive electrode active material according to claim 1,
wherein the lithium-rich manganese-based oxide is represented by the following Formula 1.
[Formula 1] xLi₂MnO₃·(1-x)Li[Ni_{1-y-z-w}Mn_{y}Co_{z}M_{w}]O₂
wherein M is at least one selected from the group consisting of Al, B, Co, Fe, Cr, Cu, W, Mg, V, Ti, Zn, Ga, In, Ru, Nb, Sn, Sr and Zr, 0.1≤x≤0.5, 0.4≤y<1, 0≤z≤0.1, and 0≤w≤0.2.

3. The positive electrode active material according to claim 1,
wherein the ratio of Li/Me in the surface layer is 0.8 to 0.98.

4. The positive electrode active material according to claim 1,
wherein the surface layer comprises a compound including Li, Fe, and P.

5. The positive electrode active material according to claim 1,
wherein the surface layer does not comprise Mn, or comprises Mn in an amount of 0.1 mol or less relative to 1 mol of Fe.

6. The positive electrode active material according to claim 1,
wherein the surface layer has a thickness of 3 nm to 2 µm.

7. The positive electrode active material according to claim 1,
wherein the surface layer is formed over an area of 0.03% to 100% of the total surface area of the core.

8. A method of manufacturing the positive electrode active material as set forth in claim 1, the method comprising:
preparing a lithium-rich manganese-based oxide powder, mixing it with a solution containing a surface layer precursor, and washing the lithium-rich manganese-based oxide powder to form a surface layer.

9. The method of manufacturing a positive electrode active material according to claim 8,
wherein the surface layer precursor is a compound including Fe and a compound including P.

10. The method of manufacturing a positive electrode active material according to claim 8,
wherein the solution is distilled water.

11. The method of manufacturing a positive electrode active material according to claim 8,
wherein the mixing is performed at a temperature of 20°C to 80°C.

12. The method of manufacturing a positive electrode active material according to claim 8,
wherein the mixing is performed for 2 minutes to 2 hours.

13. The method of manufacturing a positive electrode active material according to claim 8,
wherein the forming a surface layer is performed by the mixing, followed by drying and firing.

14. The method of manufacturing a positive electrode active material according to claim 13,
wherein the drying is performed at a temperature of 80°C to 150°C for 1 hour to 10 hours.

15. The method of manufacturing a positive electrode active material according to claim 13,
wherein the firing is performed at a temperature of 500°C to 1050°C for 1 hour to 20 hours.

16. A lithium secondary battery comprising:
a positive electrode including the positive electrode active material as set forth in any one of claims 1 to 7,
a negative electrode, and a separator interposed between the positive electrode and the negative electrode.
